# EUROPÄISCHE PATENTANMELDUNG

(11) **EP 0 526 957 A1**
(43) Veröffentlichungstag der Anmeldung: **10.02.1993**
(21) Anmeldenummer: 92250171.3
(22) Anmeldetag: 29.06.1992
(51) Int. Cl.: B60N 3/00

(54) **Klapptisch für Flugzeuge und Fahrzeuge, insbesondere Kraftfahrzeuge**

(30) Priorität: 29.06.1991 DE 4121660
(71) Anmelder: Firma JULIUS HEYWINKEL GmbH, D-49084 Osnabrück (DE)
(72) Erfinder: Hahn, Christian, W-2000 Hamburg 52 (DE)
(74) Vertreter: Busse & Busse Patentanwälte

(57) **Zusammenfassung**

Bei einem Klapptisch für Flugzeuge und Fahrzeuge, insbesondere Kraftfahrzeuge, mit einer ausklappbaren Tischplatte (1), die mit ihrem inneren Ende schwenkbar und verschiebbar in seitlichen Rahmenabschnitten (11, 12) gehalten ist und mit der im Abstand vom inneren Ende schwenkbar Streben (4, 5) verbunden sind, die an Anlenkpunkten (8, 9) schwenkbar an dem die seitlichen Rahmenabschnitten (11, 12) aufweisenden Tischrahmen (10) angebracht sind, wobei das innere Ende der Tischplatte (1) bei in die Benutzungsstellung ausgeschwenkter Tischplatte (1) höher als bei eingeschwenkter Tischplatte (1) liegt, liegen die Anlenkpunkte (8, 9) für die Streben (4, 5) am Tischrahmen (10) oberhalb der höchsten Lage des inneren Endes der Tischplatte (1) bezüglich der seitlichen Rahmenabschnitte (11, 12), und die Schwenkverbindungen (6, 7) zwischen Tischplatte (1) und Streben (4, 5) sind bezüglich der Streben (4, 5) unverlagerbar.

## Beschreibung

Die Erfindung bezieht sich auf einen Klapptisch für Flugzeuge und Fahrzeuge, insbesondere Kraftfahrzeuge, mit einer ausklappbaren Tischplatte, die mit ihrem inneren Ende schwenkbar und verschiebbar in seitlichen Rahmenabschnitten gehalten ist und mit der im Abstand vom inneren Ende schwenkbar Streben verbunden sind, die an Anlenkpunkten, die oberhalb der höchsten Lage des inneren Endes der Tischplatte bezüglich der seitlichen Rahmenabschnitte liegen, schwenkbar an dem die seitlichen Rahmenabschnitte aufweisenden Tischrahmen angebracht sind, wobei das innere Ende der Tischplatte bei in die Benutzungsstellung ausgeschwenkter Tischplatte höher als bei eingeschwenkter Tischplatte liegt und die Schwenkverbindungen zwischen Tischplatte und Streben bezüglich der Streben unverlagerbar sind.

Bei einem bekannten Klapptisch dieser Art (US-A-2 284 811) steht das innere Ende der Tischplatte in der Benutzungsstellung in Eingriff mit einem sich im wesentlichen horizontal erstreckenden kurzen Abschnitt eines Führschlitzes in der an beiden Seiten vorgesehenen Führschiene, wobei der an den kurzen Abschnitt anschließende längere Abschnitt des Führschlitzes im wesentlichen nach unten verläuft. Dadurch wird die Tischplatte in der Benutzungsstellung sicher positioniert, muß jedoch, um die Tischplatte aus der Benutzungsstellung zu bewegen, in Richtung auf den Benutzer gezogen werden, so daß ein Übergang der Führvorsprünge vom im wesentlichen horizontalen kurzen Abschnitt der Führnut in den längeren, im wesentlichen senkrechten Abschnitt der Führnut bewirkt wird und dadurch das innere Ende der Tischplatte abwärts bewegt werden kann.

Ein derartiger Aufbau hat zur Folge, daß die Tischplatte bei einem eventuellen Unfall, bei dem der Flugzeug- oder Fahrzeuginsasse in Richtung auf die in der Benutzungsstellung befindliche Tischplatte geschleudert wird, schwere Verletzungen hervorrufen kann.

Bei einem anderen bekannten Klapptisch (DE-B-36 24 156), dessen Tischplatte mittels einer Antriebsvorrichtung zwischen einer ausgeklappten Benutzungsstellung und einer eingeklappten Stellung bewegbar ist und bei der das Einklappen bei hohen Verzögerungswerten von der Antriebsvorrichtung selbsttätig vorgenommen werden soll, um auf diese Weise die Verletzungsgefahr für Fahrzeuginsassen im Falle eines Unfalls zu verringern, ist die Tischplatte mit ihrem inneren Ende in den seitlichen Rahmenabschnitten eines viereckigen Rahmens gehaltert und aus einer Benutzungsstellung bewegbar, indem das innere Ende der Tischplatte in den seitlichen Rahmenabschnitten nach unten bewegt wird. Die Tischplatte ist zusätzlich durch Streben positioniert, die an den unteren Enden der seitlichen Rahmenabschnitte schwenkbar befestigt sind und die in schwenkbarem Eingriff mit den Seitenkanten der Tischplatte stehen. Bei der gegebenenfalls durch eine Not-Zugeinrichtung ausgelösten Abwärtsbewegung des inneren Endes der Tischplatte bewegen sich die den Schwenkeingriff zwischen Tischplatte und Streben herstellenden, an den Seitenkanten der Tischplatte angebrachten Nockenelemente in Führschlitzen in den Streben nach unten und schwenken dabei auch die Streben gegen die auf diese wirkende Federkraft in Richtung auf die seitlichen Rahmenabschnitte.

Offenbar begrenzen bei dem bekannten Klapptisch die Streben lediglich die Aufwärtsbewegung der Tischplatte über die Benutzungsstellung hinaus, denn an den Streben sind keine Einrichtungen vorhanden, mit denen die an den Längskanten der Tischplatte befestigten Nocken in der Benutzungsstellung der Tischplatte in abstützenden Eingriff kommen könnten. Die gesamte Abstützung der Tischplatte in der Benutzungsstellung erfolgt daher im Bereich des Eingriffs von innerem Ende der Tischplatte und seitlichen Rahmenabschnitten und über die Not-Zugverbindung, die das Absinken des vorderen Endes der Tischplatte unter Last verhindert. Der bekannte Klapptisch eignet sich daher überhaupt nicht für einen reinen Handbetrieb, und die an ihm vorgesehenen Streben wirken der an sich gewünschten schnellen Verlagerung der Tischplatte aus der Benutzungstellung in die eingeklappte Stellung unter Aufwärtsbewegung des vorderen Endes der Tischplatte entgegen bzw. erschweren eine derartige Verlagerung.

Es ist Aufgabe der Erfindung, einen Klapptisch für Flugzeuge und Fahrzeuge, insbesondere Kraftfahrzeuge zu schaffen, dessen Tischplatte sich unter Belastung, etwa durch einen infolge eines Unfalls auf ihr freies Ende geschleuderten Flugzeug-oder Fahrzeuginsassen nach oben und dieser Belastung ausweichend verlagert, so daß die Verletzungsgefahr für den Insassen erheblich verringert ist.

Zur Lösung dieser Aufgabe wird ein Klapptisch der eingangs erwähnten Art erfindungsgemäß derart ausgestaltet, daß das innere Ende der Tischplatte aus der Benutzungsstellung nach unten verlagerbar ist und daß ein zwischen den Verbindungspunkten von Tischplatte und Streben und dem äußeren Ende der Tischplatte liegender Abschnitt der Tischplatte gegenüber dem übrigen Teil der in der Benutzungsstellung befindlichen Tischplatte nach oben schwenkbar ist.

Bei dem erfindungsgemäßen Klapptisch bilden die Tischplatte in der Benutzungsstellung und die mit ihr verbundenen Streben eine Anordnung, durch die es möglich wird, daß die Tischplatte infolge einer an ihrem freien Ende angreifenden, nach oben gerichteten Kraft leicht aus der Benutzungsstellung zu verschwenken ist. Hierbei wird das innere Ende der Tischplatte in den seitlichen Rahmenabschnitten nach unten verlagert, ohne daß zuvor eine die Kopplung der Tischplatte mit den seitlichen Rahmenabschnitten aufhebende Bewegung erforderlich wäre. Die Tischplatte kann daher ohne nennenswerten Widerstand aus ihrer Benutzungsstellung ausweichen, wenn ein Flugzeug-oder Fahrzeuginsasse infolge einer bei einem Unfall auftretenden Bewegung nach vorn, die insbesondere bei Kraftfahrzeugen meist auch mit einer Bewegungskomponente nach oben verbunden ist, auf das freie Ende der Tischplatte trifft, wodurch ernsthafte Verletzungen durch die Tischplatte vermieden werden.

Zusätzlich kann der dem Insassen zugewandte Abschnitt der Tischplatte unter einer derartigen Belastung nach oben schwenkbar sein, wobei eine derartige Verschwenkung beispielsweise über eine Sollbruchstelle erfolgen kann, so daß der dem betroffenen Insassen zugewandte Teil der Tischplatte bei einem Aufprall des Fahrzeuginsassens nach oben wegschwenkt, also zusätzlich zu der vorstehend erläuterten Verlagerungsbewegung der Tischplatte eine zusätzliche Verschwenkung erfolgt, durch die die Verletzungsgefahr noch weiter verringert wird, da sich u.a. die Aufprallfläche vergrößert.

In einer vorteilhaften Ausgestaltung der Erfindung kann die höchste Lage des inneren Endes der Tischplatte veränderbar sein, wozu beispielsweise verstellbare Anschläge vorgesehen sind. Dadurch wird es möglich, die Lage der Tischplatte im Gebrauch so zu verändern, daß sie in der Benutzungsstellung horizontal ausgerichtet ist, selbst wenn die Neigung der den Klapptisch aufnehmenden Rückenlehne verändert wird.

Die Streben können eine Länge haben, die der halben Tischplattenlänge entspricht.

Die Tischplatte kann mit einem von einem Motorantrieb bewegbaren Riemen gekoppelt sein, mit dem die Tischplatte zwischen der Benutzungsstellung und der eingeschwenkten Stellung bewegbar ist, und die Tischplatte kann unter Überwindung der Reibschlußwirkung des Riemens aus der Benutzungsstellung bewegbar sein. Auf diese Weise wird ein Klapptisch geschaffen, dessen Tischplatte motorgetrieben verstellbar ist, ohne daß die Kopplung zwischen Motor und Tischplatte die Verschwenkung der Tischplatte aus der Benutzungsstellung im Falle eines Unfalls behindert.

Der Riemen kann fest mit einer im Bereich des inneren Endes der Tischplatte vorgesehenen und mit dieser entlang der seitlichen Rahmenabschnitte verfahrbaren Traverse verbunden und über eine bezüglich dem Tischrahmen stationär gelagerte Antriebsrolle sowie eine bezüglich der Tischplatte stationär gelagerte Umlenkrolle geführt sein.

Die Erfindung wird im folgenden anhand der schematisch und vereinfacht ein Ausführungsbeispiel zeigenden Figuren näher erläutert.
Figur 1 zeigt einen Klapptisch mit eingeschwenkter Tischplatte, wobei zur Verdeutlichung nur der Plattenrahmen für die Aufnahme des eigentlichen Plattenelementes gezeigt ist.
Figur 2 zeigt den Klapptisch aus Figur 1 mit teilweise ausgeklappter Tischplatte.
Figur 3 zeigt eine Seitenanischt des Klapptisches aus den Figuren 1 und 2 mit teilweise ausgeklappter Tischplatte.
Figur 4 zeigt in einer Darstellung entsprechend Figuren 1 und 2 den Klapptisch mit in die Benutzungsstellung geschwenkter Tischplatte.
Figur 5 zeigt den Klapptisch in einer Stellung entsprechend Figur 2, wobei die Rückseite des Tischrahmens zu erkennen ist.
Figur 6 zeigt eine Draufsicht auf die Rückseite des Klapptisches gemäß Figuren 1 bis 5, wobei zusätzlich der Riemen für einen motorischen Antrieb dargestellt ist.

Der dargestellte Klapptisch hat einen Tischrahmen 10 mit Seitenwandabschnitten 11 und 12 und einer Rückwand 14 und ist beispielsweise in die Rückseite der Rückenlehne eines Flugzeug- oder Fahrzeugsitzes einbaubar. Am Tischrahmen 10 ist in noch zu beschreibender Weise schwenkbar die Tischplatte 1 befestigt, die von einem Plattenrahmen 2 und einer nicht dargestellten, in den Plattenrahmen 2 einzusetzenden Platte gebildet wird.

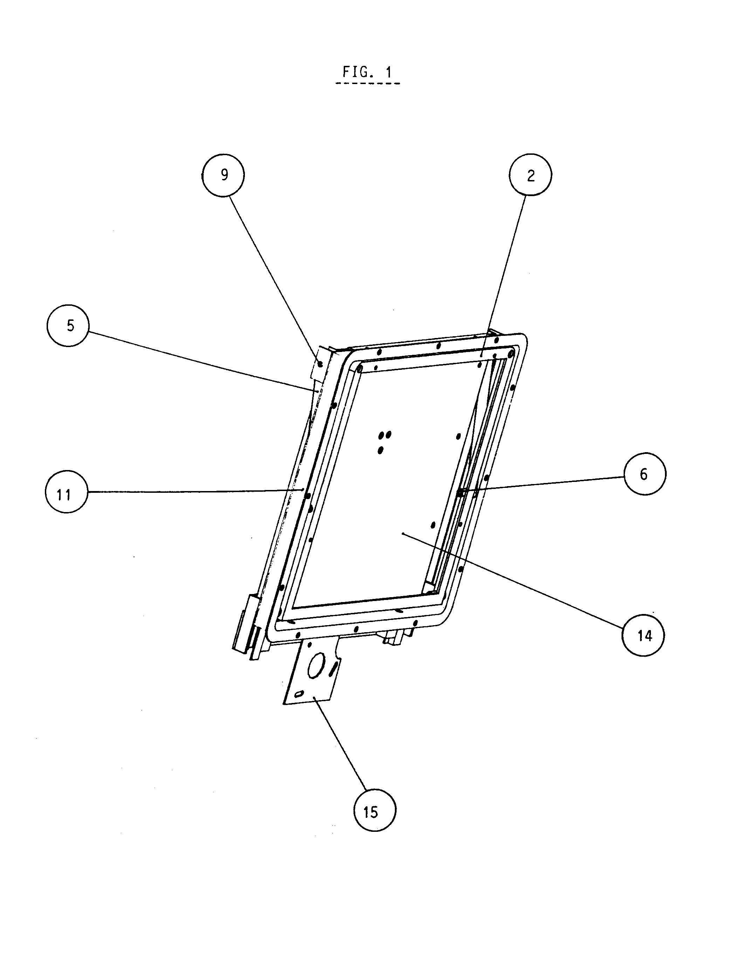

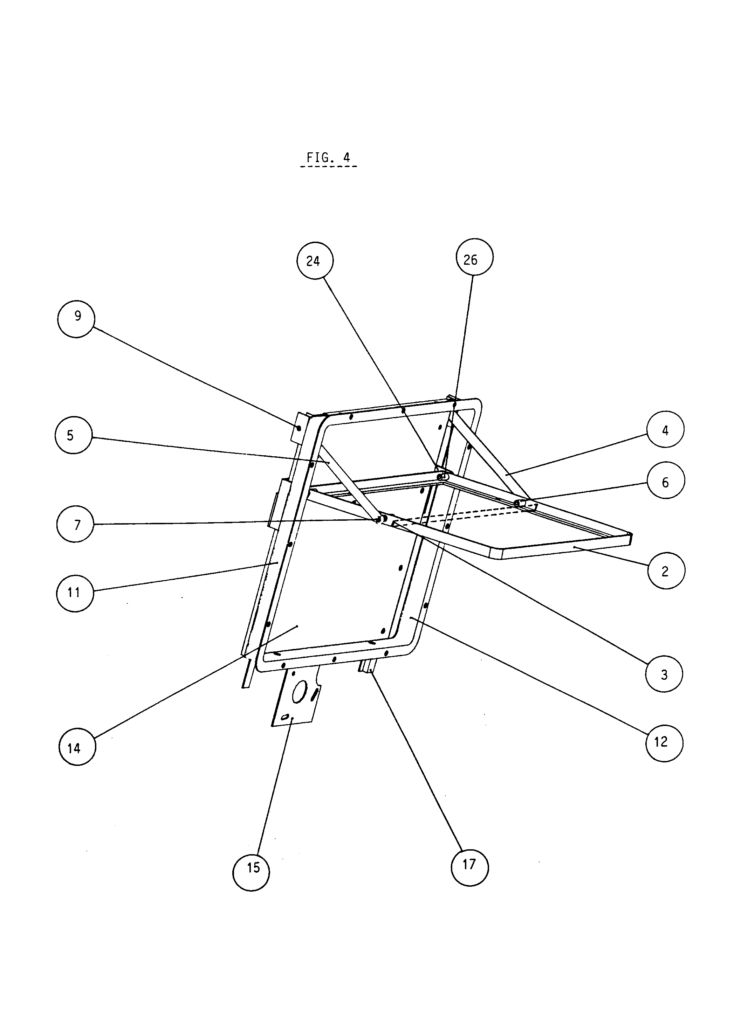

Die Rückwand 14 trägt an ihrer dem Plattenrahmen 2 abgewandten Seite 2 zwei parallele Führschienen 16, 17, die zur Führung einer Traverse 21 dienen, die über Führstücke 22, 23 mit den Führschienen 16, 17 gekoppelt ist. An den äußeren Enden der Traverse 21 sind Winkelelemente 24, 25 befestigt, deren freie Schenkel sich in Aussparungen zwischen den seitlichen Rahmenabschnitten 11, 12 und dem Plattenrahmen 2 erstrecken. An den Winkelstücken 24, 25 ist über Schwenkverbindungen, von denen nur die Schwenkverbindung 26 am Winkelstück 24 bezeichnet ist, das innere Ende des Plattenrahmens 2 schwenkbar befestigt. Die Traverse 21 und somit das innere Ende des Plattenrahmens 2 können zwischen einer Stellung gemäß Figuren 1, 5 und 6 und einer Stellung gemäß Figur 4 verfahren werden, wobei die Stellung gemäß Figur 4 durch nicht dargestellte Anschläge, die die Bewegung am Tischrahmen 10 (in Figur 4) nach oben begrenzen, verändert werden kann.

Zur Halterung an der Traverse 21 ist der Plattenrahmen 2 über Streben 4, 5 mit dem Tischrahmen 10 gekoppelt. Die Streben 4, 5, die etwa die halbe Länge des Plattenrahmens 1 haben, sind bei 6 und 7 schwenkbar an dessen Außenseite befestigt, wobei diese Schwenkverbindungen 6, 7 sich in einem Abstand von weniger als der Hälfte der Länge des Plattenrahmens 2 von dessen innerem Ende befinden. Mit ihren anderen Enden sind die Streben 4, 5 bei 8 und 9 schwenkbar im Bereich der seitlichen Rahmenabschnitte 11, 12 des Tischrahmens 10 befestigt. Die Schwenkverbindungen 8, 9 liegen im oberen Endbereich des Tischrahmens 10, und in jeder Stellung der Tischplatte 1 befindet sich deren inneres Ende unterhalb dieser Schwenkverbindungen.

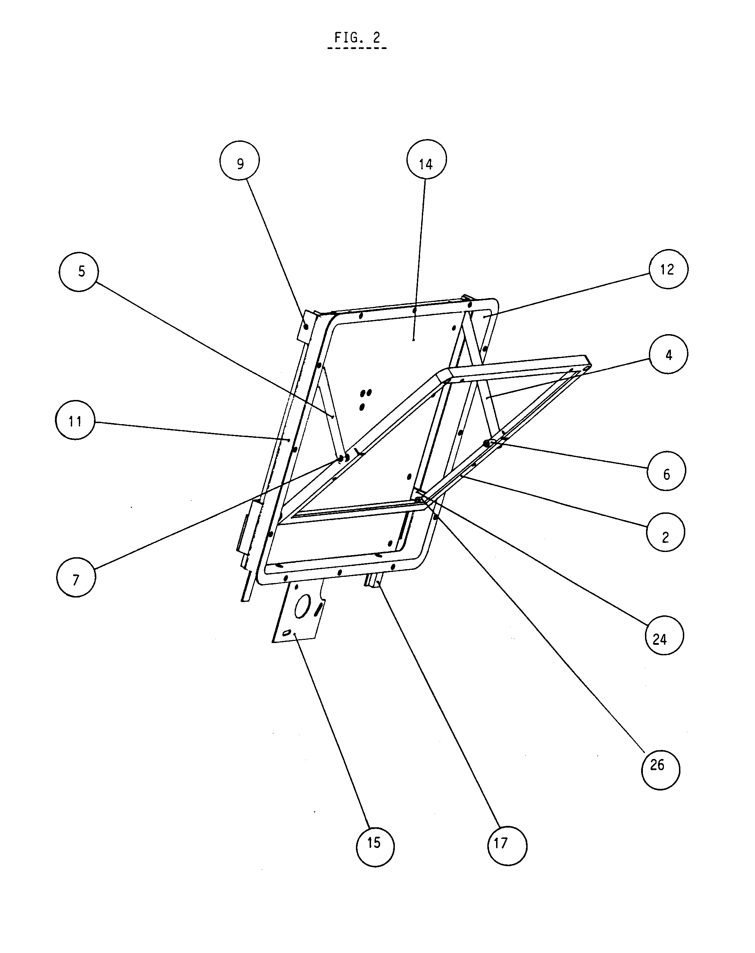

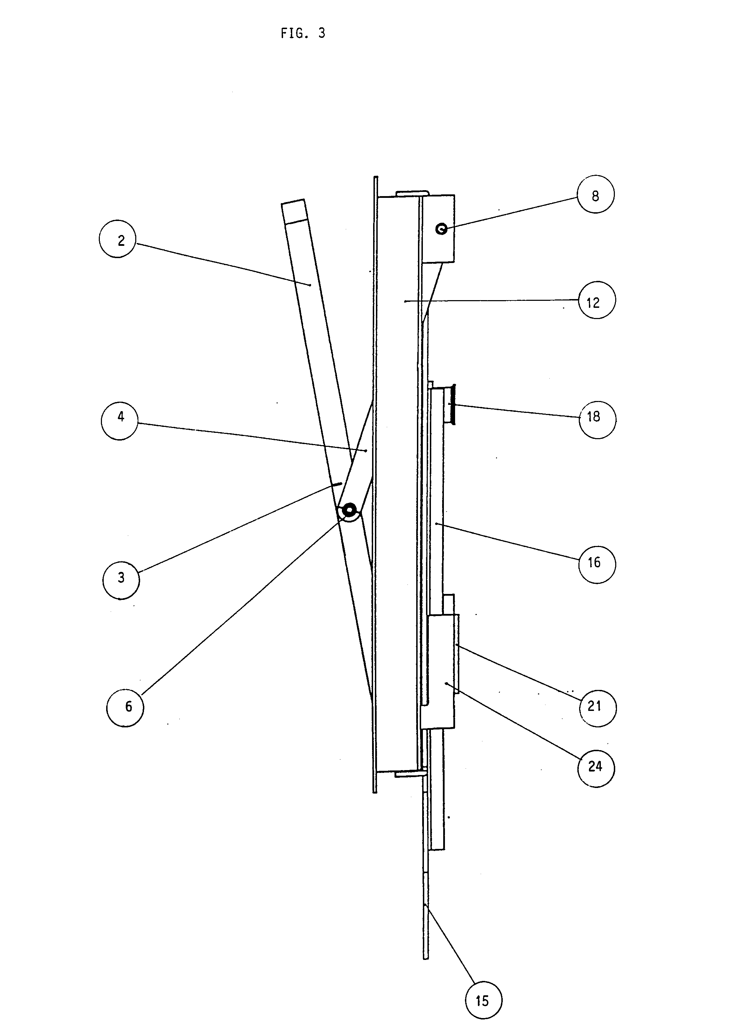

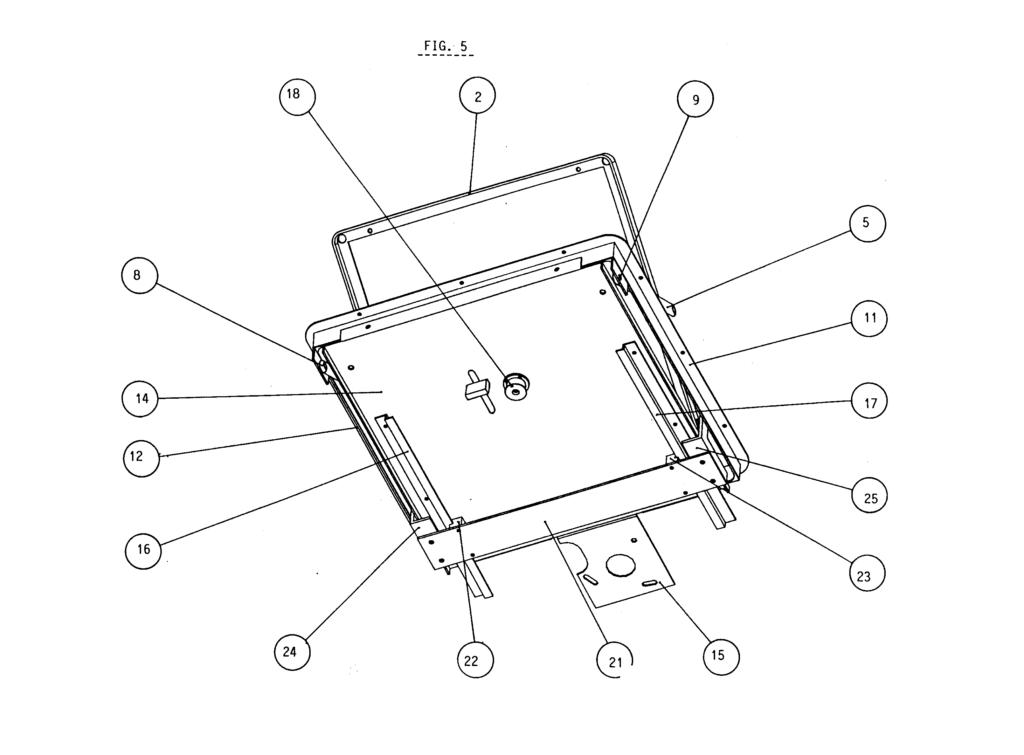

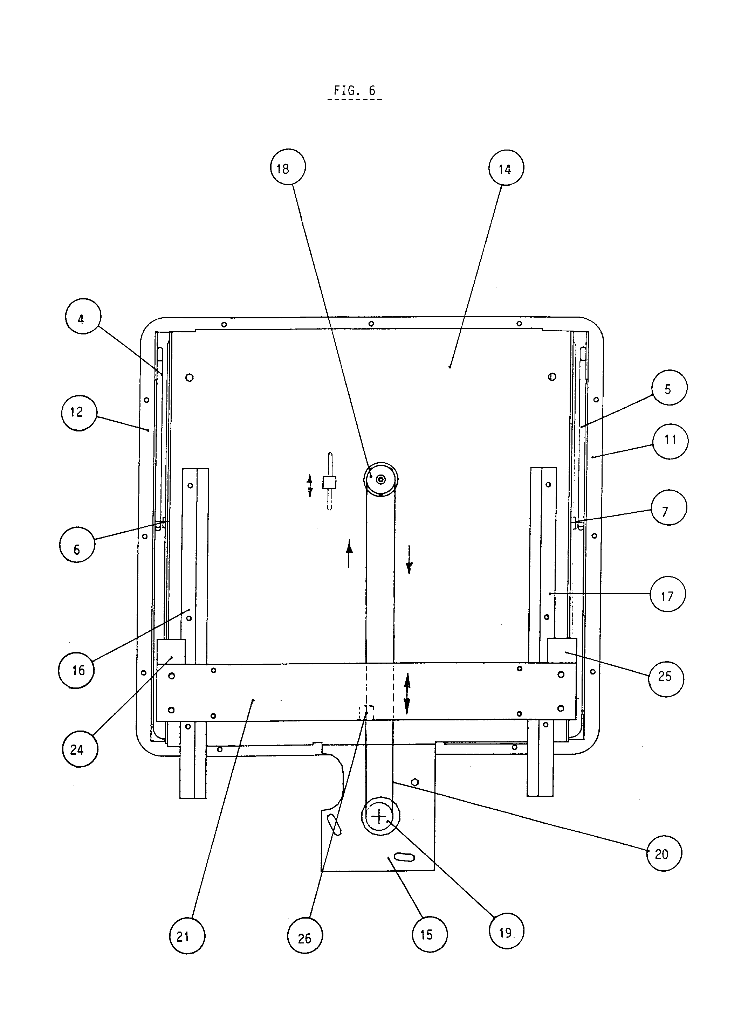

Wie insbesondere Figur 1 zu entnehmen ist, läßt sich der Plattenrahmen 2 so in den Tischrahmen 10 einschwenken, daß er und die mit ihm verbundenen Streben 4, 5 nicht über die Ebene des vorderen Randes des Tischrahmens 10 vorstehen. Wenn der Benutzer die Tischplatte 1, etwa durch Ergreifen am vorderen (in Figur 1 oberen) Ende des Plattenrahmens 2 herausschwenkt, gleitet, wie den Figuren 2 bis 5 zu entnehmen ist, die Traverse 21 und damit das innere Ende des Plattenrahmens 2 unter entsprechender Verschwenkung entlang den seitlichen Rahmenabschnitten 11 und 12 nach oben, und gleichzeitig werden die Streben 4, 5 herausgeschwenkt, bis die Tischplatte 1 in die Stellung gemäß Figur 4 gelangt ist, in der sie sich in einer horizontalen Lage befindet und die weitere Verlagerungsbewegung der Traverse durch einen verstellbaren Anschlag verhindert wird, der in den Figuren 5 und 6 neben der noch zu beschreibenden Umlenkrolle 18 schematisch dargestellt ist und auf das innere Ende des Plattenrahmens 2 einwirkt. In dieser Stellung werden die Streben 4, 5 bei Belastung der Tischplatte 1 auf Zug belastet und halten die Tischplatte 1 in ihrer Lage.

Um die Tischplatte von der Stellung gemäß Figur 4 in die Stellung gemäß Figur 1 zurückzuschwenken, braucht der Benutzer lediglich am vorderen Ende des Plattenrahmens 2 anzugreifen und eine schräg nach oben und auf den Tischrahmen 10 gerichtete Kraft aufzubringen, wodurch die Tischplatte 1 um die am inneren Ende vorgesehenen Schwenkverbindungen 26 verschwenkt und gleichzeitig die Traverse 21 und damit das innere Ende der Tischplatte 1 nach unten verlagert werden, während die Streben 4, 5 um die Schwenkverbindung 6, 7 und 8, 9 verschwenkt werden. Dabei erfolgt keine Verschiebewegung der Streben 4, 5 bezüglich der Tischplatte 1 und/oder des Tischrahmens 10, so daß auch keine Blockierungen durch Reibung o.ä. eintreten können.

Es sei darauf hingewiesen, daß der Plattenrahmen 2 und entsprechend auch das nicht dargestellte an oder in diesem zu befestigende Plattenelement eine Sollbruchstelle 3 aufweisen, die in Form eines zur Unterseite offenen Einschnittes parallel zu den Achsen der Schwenkverbindungen 6, 7 und weiter außen als diese verläuft. Da die Sollbruchstelle 3 lediglich als ein nach unten offener Einschnitt ausgebildet ist, ergibt sich in der Benutzungsstellung (Figur 4) der Tischplatte 1 keine Schwächung, sondern die benachbarten Wandbereich des Einschnittes stützen sich bei Belastung des äußeren Abschnittes der Tischplatte 1 gegeneinander ab. Wenn jedoch die Tischplatte, etwa durch Auftreffen des Insassens infolge eines Unfalls am äußeren Ende infolge einer stoßartigen Belastung mit einer dabei üblicherweise schräg nach oben gerichteten Kraft beaufschlagt wird, bricht der äußere Abschnitt der Tischplatte 1 im Bereich der Sollbruchstelle 3, und der äußere Abschnitt der Tischplatte 1 wird unter Vermeidung von Verletzungen des Insassens nach oben gedrückt.

Wie dargestellt, ist an der unteren Seite des Tischrahmens 10 eine Tragplatte 15 angebracht, die dazu dienen kann, einen Antrieb für eine motorische Bewegung der Tischplatte 1 aufzunehmen. Wie insbesondere in Figur 6 zu erkennen ist, kann an dieser Tragplatte ein nicht dargestellter Antriebsmotor befestigt werden, der eine Antriebsrolle 19 treibt, über die ein Riemen 20 läuft, der über eine Umlenkrolle 18 an der Rückseite der Rückwand 14 geführt ist. Der Riemen 20 ist bei 20' fest mit der Traverse 21 verbunden. Wird daher die Antriebsrolle 19 angetrieben, so erfolgt eine entsprechende Verlagerungsbewegung des Riemens 20 und dadurch die Bewegung der Traverse 21 zum Aus- und Einklappen der Tischplatte 1.

Da der Antrieb über einen Riemen 20 erfolgt, der ein Keilriemen oder ein Zahnriemen sei kann, kann die Tischplatte 1 im Falle der Belastung durch die verhältmnismäßig großen Kräfte bei dem Auftreffen eines Insassen infolge eines Unfalls aus der Stellung gemäß Figur 4 in die Stellung gemäß Figur 1 verschwenkt werden, wobei die Antriebsanordnung diese Verschwenkbewegung nicht behindert, da der Riemen 20 unter Überwindung der Kopplung mit der Antriebsrolle 19 und/oder der Umlenkrolle 18 über diese gleiten kann, wodurch die sonst vorhandene Blockierung einer derartigen Verlagerungsbewegung der Tischplatte durch den Motorantrieb aufgehoben wird.

## Patentansprüche

1. Klapptisch für Flugzeuge und Fahrzeuge, insbesondere Kraftfahrzeuge, mit einer ausklappbaren Tischplatte (1), die mit ihrem inneren Ende schwenkbar und verschiebbar in seitlichen Rahmenabschnitten (11, 12) gehalten ist und mit der im Abstand vom inneren Ende schwenkbar Streben (4, 5) verbunden sind, die an Anlenkpunkten (8, 9), die oberhalb der höchsten Lage des inneren Endes der Tischplatte (1) bezüglich der seitlichen Rahmenabschnitte (11, 12) liegen, schwenkbar an dem die seitlichen Rahmenabschnitte (11, 12) aufweisenden Tischrahmen (10) angebracht sind, wobei das innere Ende der Tischplatte (1) bei in die Benutzungsstellung ausgeschwenkter Tischplatte (1) höher als bei eingeschwenkter Tischplatte (1) liegt und die Schwenkverbindungen (6, 7) zwischen Tischplatte (1) und Streben (4, 5) bezüglich der Streben (4, 5) unverlagerbar sind, dadurch gekennzeichnet, daß das innere Ende der Tischplatte (1) aus der Benutzungsstellung nach unten verlagerbar ist und daß ein zwischen den Verbindungspunkten (6, 7) von Tischplatte (1) und Streben (4, 5) und dem äußeren Ende der Tischplatte (1) liegender Abschnitt der Tischplatte (1) gegenüber dem übrigen Teil der in der Benutzungsstellung befindlichen Tischplatte (1) nach oben schwenkbar ist.

2. Klapptisch nach Anspruch 1, dadurch gekennzeichnet, daß die höchste Lage des inneren Endes der Tischplatte (1) veränderbar ist.

3. Klapptisch nach Anspruch 2, dadurch gekennzeichnet, daß zur Veränderung der höchsten Lage des inneren Endes der Tischplatte (1) an den seitlichen Rahmenabschnitten (11, 12) verstellbare Anschläge angeordnet sind.

4. Klapptisch nach einem der Ansprüche 1 bis 3, dadurch gekennzeichnet, daß die Streben (4, 5) eine Länge haben, die in etwa der halben Tischplattenlänge entspricht.

5. Klapptisch nach einem der Ansprüche 1 bis 4, dadurch gekennzeichnet, daß der Abschnitt der Tischplatte (1) über eine Sollbruchstelle (3) schwenkbar ist.

6. Klapptisch nach einem der Ansprüche 1 bis 5, dadurch gekennzeichnet, daß die Tischplatte (1) mit einem von einem Motorantrieb bewegbaren Riemen (20) gekoppelt ist, mit dem die Tischplatte (1) zwischen der Benutzungsstellung und der eingeschwenkten Stellung bewegbar ist, und daß die Tischplatte (1) unter Überwindung der Reibschlußwirkung des Riemens (20) aus der Benutzungsstellung bewegbar ist.

7. Klapptisch nach Anspruch 6, dadurch gekennzeichnet, daß der Riemen (20) fest mit einer im Bereich des inneren Endes der Tischplatte (1) vorgesehenen und mit diesem entlang der seitlichen Rahmenabschnitte (11, 12) verfahrbaren Traverse (21) verbunden und über eine bezüglich dem Tischrahmen (10) stationär gelagerte Antriebsrolle (19) und eine bezüglich der Tischplatte (1) stationär gelagerte Umlenkrolle (18) geführt ist.
